# EUROPEAN PATENT SPECIFICATION

(11) **EP 2 602 889 B1**
(45) Date of publication and mention of the grant of the patent: **25.03.2015**
(21) Application number: 12006994.3
(22) Date of filing: 09.10.2012
(51) Int. Cl.: H02G 3/32

(54) **Wire fixing member and wire fixing method**
Drahtbefestigungselement und Drahtbefestigungsverfahren
Élément de fixation de fils et procédé de fixation de fil

(30) Priority: 05.12.2011 JP 2011265544
(43) Date of publication of application: 12.06.2013
(73) Proprietor: Sumitomo Wiring Systems, Ltd., Yokkaichi-city, Mie 510-8503 (JP)
(72) Inventor: Akuta, Daisuke, Yokkaichi-City MIE 510-8503 (JP)
(74) Representative: Müller-Boré & Partner Patentanwälte PartG mbB

(56) References cited:
- WO-A1-2010/131772
- DE-A1-102011 008 264
- US-A1- 2008 138 018
- US-B1- 6 660 937

## Description

The present invention relates to a wire fixing member with a shield shell and to a wire fixing method.

A wire fixing member disclosed in Japanese Unexamined Patent Publication No. 2002-134953 is, for example, known as a wire fixing member of this type. This wire fixing member is fixed to a case of, e.g. a device while fixing wires and includes a crimp fitting which is made of metal and crimped and connected to the wires, a wire holder which is composed of a pair of half members for sandwiching this crimp fitting from upper and lower sides, and a shield shell which is to be fixed to the case while accommodating the wire holder inside.

In fixing the wires to the wire fixing member, the crimp fitting is first crimped and connected to insulation coatings of the wires and sandwiched from upper and lower sides by the wire holder, whereby the wire holder is fixed to the wires. Then, by accommodating the wire holder in the shield shell such that the wire holder does not come out, the wires are fixed to the wire fixing member.

Since the crimp fitting made of metal is crimped and connected to the insulation coatings of the wires in the wire fixing member as described above, the crimp fitting crimped and connected to the wires may bite into the insulation coatings to break the insulation coatings and cores and the like inside may be damaged if the wires are strongly pulled or largely swung.

US 6 660 937 B1 discloses a compounded injection molded plastic grommet including a rigid core and a soft elastomeric overmold defining a body portion with a soft elastomeric tube surrounding a portion of the wiring harness and exposed rigid plastic attachment tabs both fore and aft of the grommet body.

DE 10 2011 008264 A1 discloses a connector which includes a metallic shield shell to be mounted at ends of a plurality of wires. The shield shell includes a mounting portion for fixing the connector to a case of a device, and the mounting portion includes a wire fixing portion for holding and fixing the plurality of wires on a surface thereof at a draw-out side of the wires.

The present invention was completed in view of the above situation and an object thereof is to provide a wire fixing member which shields a wire well.

This object is solved according to the invention by the features of the independent claims. Particular embodiments of the invention are subject of the dependent claims.

According to one aspect of the invention there is provided a wire fixing member to be fixed to a case housing of a device by fixing a shield shell to the case, comprising a housing to be at least partly held in the shield shell; at least one wire pulled out through the housing; at least one housing projecting portion located at a part of the housing where the wire is pulled out and formed to project substantially along the wire; and a covering member for integrally fixing the wire and the housing projecting portion by covering both the wire and the housing projecting portion and adhering to the wire and the housing projecting portion. The shield shell comprise at least one shield-connecting portion through which the wire can be passed, and the shield-connecting portion is to be connected to the wire by means of a shield conductor and a connection member.

According to the wire fixing member thus configured, if the wire is strongly pulled or largely swung, the covering member is caused to follow the wire and the wire and the housing projecting portion can be maintained in an integrally fixed state. By this, a state where the wire is fixed to the housing can be maintained without damaging an insulation coating of the wire.

The following configurations are preferable as embodiments of the present invention.

The housing projecting portion may be formed with at least one guide groove into which the wire at least partly is to be fitted.

According to such a configuration, the wire can be easily arranged substantially along the housing projecting portion by being at least partly fitted into the guide groove, whereby operability in integrally fixing the wire and the housing projecting portion by the covering member can be improved.

At least one flange which bites or engages into the covering member may be formed at or near a leading end part of the housing projecting portion in a projecting direction.

According to such a configuration, the flange bites or engages into the covering member, whereby a fixing force of the covering member to the housing projecting portion can be enhanced.

The covering member may be or comprise an adhesive tape which sticks to the wire and the housing projecting portion.

According to such a configuration, the adhesive tape can stick to the wire and the housing projecting portion and the wire and the housing projecting portion can be more reliably integrally fixed as compared with a heat shrinking tube or the like.

A dimension of the housing projecting portion in a projecting direction may be slightly larger than the outer diameter of the wire.

A width of the covering member may be slightly larger than a projecting distance of the housing projecting portion.

The covering member may be wound around the housing projecting portion and the wire in the width direction intersecting with an extending direction of the wire and/or may substantially cover from a base end of the housing projecting portion to a position somewhat before the leading end of the housing projecting portion.

The housing may comprise a resilient plug accommodating portion for at least partly accommodating a respective resilient plug fitted to the wire inside to provide fluidproofness.

According to a further aspect of the invention, there is provided a method for fixing at least one wire to a wire fixing member to be fixed to a case housing of a device by fixing a shield shell to the case, comprising:
providing a housing to be at least partly held in the shield shell;
pulling out at least one wire through the housing such as to be located near and project substantially along at least one housing projecting portion of the housing;
integrally fixing the wire and the housing projecting portion by covering both the wire and the housing projecting portion with a covering member and adhering the covering member to the wire and the housing projecting portion; and
passing the wire through at least one shield-connecting portion of the shield shell, and connecting the shield-connecting portion to the wire by means of a shield conductor and a connection member.

The following configurations are preferable as embodiments of the present invention.

The wire fixing method may further comprise at least partly fitting the wire into at least one guide groove of the housing projecting portion.

The wire fixing method may further comprise biting or engaging at least one flange formed at or near a leading end part of the housing projecting portion in a projecting direction into the covering member.

The covering member may comprise an adhesive tape which sticks to the wire and the housing projecting portion.

The covering member may be wound around the housing projecting portion and the wire in the width direction intersecting with an extending direction of the wire and/or substantially covers from a base end of the housing projecting portion to a position somewhat before the leading end of the housing projecting portion.

According to the above, it is possible to fix a wire without damaging an insulation coating thereof.

These and other objects, features and advantages of the present invention will become more apparent upon reading of the following detailed description of preferred embodiments and accompanying drawings. It should be understood that even though embodiments are separately described, single features thereof may be combined to additional embodiments.
FIG. 1 is a perspective view showing a state where wires are fixed to a wire fixing member,
FIG. 2 is a plan view showing the state of FIG. 1,
FIG. 3 is a front view showing the state of FIG. 1,
FIG. 4 is a side view showing the state of FIG. 1,
FIG. 5 is a section along A-A of FIG. 3,
FIG. 6 is a section along B-B of FIG. 3,
FIG. 7 is a section along C-C of FIG. 3, and
FIG. 8 is a section along D-D of FIG. 2.

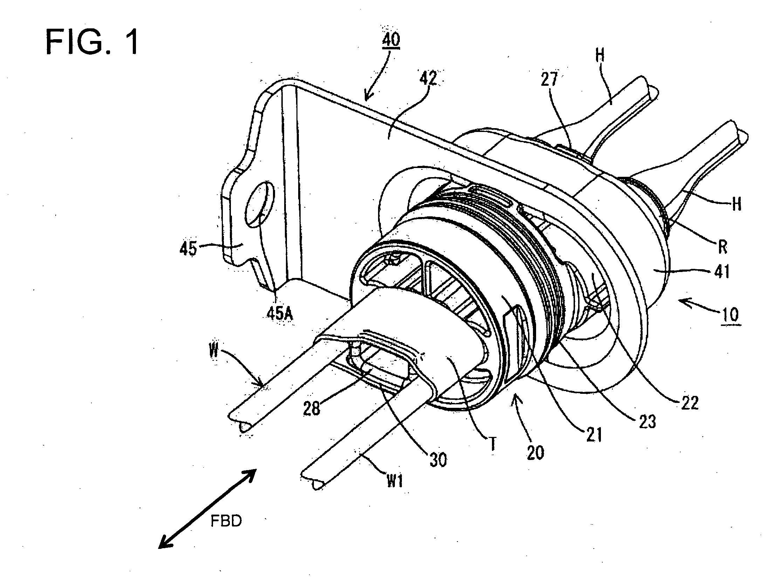

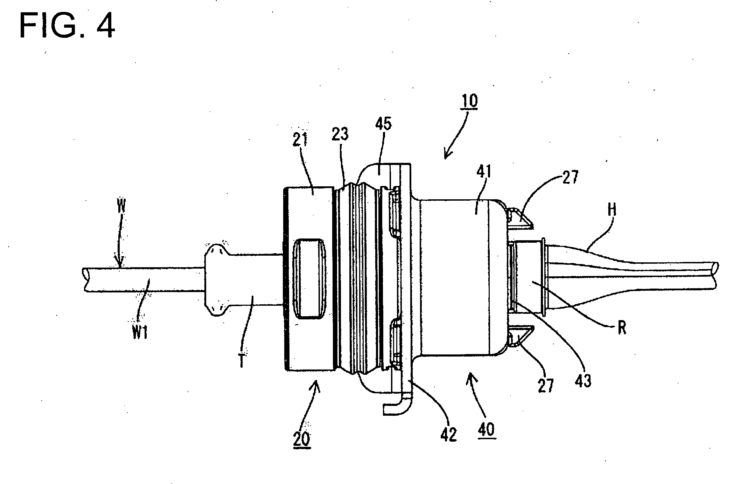

A particular embodiment of the present invention is described with reference to FIGS. 1 to 8.

As shown in FIG. 1, a wire fixing member 10 in this embodiment includes a housing 20 through which one or more wires W are to be passed substantially in forward and backward directions FBD and a shield shell 40 which is made of conductive material (such as metal) and to be mounted on (particularly a rear part of) this housing 20. A part (particularly a front part) of the housing 20 of this wire fixing member 10 at least partly is fittable or insertable into an unillustrated (particularly substantially circular or rounded) mounting hole provided in a conductive (particularly metal) case, and the shield shell 40 and the case are shield-connected particularly by fixing the shield shell 40 to the case by at least one bolt (not shown).

The wire W is such that an unillustrated core is covered by an insulation coating W1, and an unillustrated terminal fitting is connected (particularly crimped and connected) to the core exposed by stripping the insulation coating W1 at or near an end of the wire W. The end of the wire W to which the terminal fitting is connected is to be pulled into the case through the mounting hole and connected to an unillustrated device housed in the case particularly by the terminal fitting being bolted to an unillustrated terminal block provided in the case.

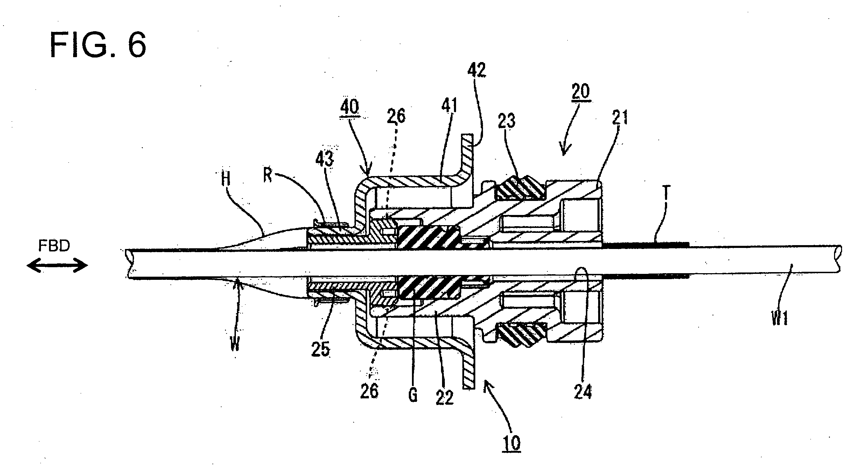

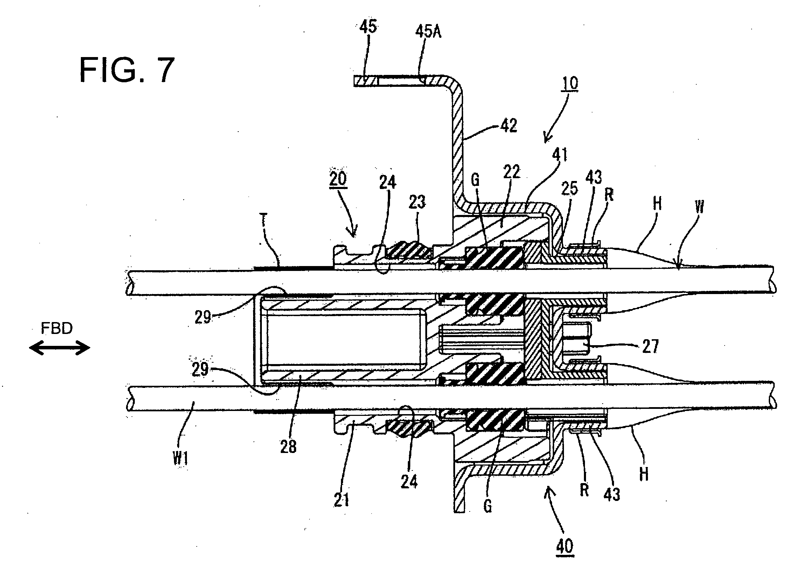

The housing 20 is made e.g. of synthetic resin and the one or more wires W are to be passed through the housing 20 substantially in forward and backward directions FBD as shown in FIGS. 6 and 7. Further, a part (particularly the front part) of the housing 20 serves as a fitting portion 21 at least partly fittable into the mounting hole and another part (particularly a rear part) thereof serves as a resilient or rubber plug accommodating portion 22 for at least partly accommodating one or more resilient plugs or rubber plugs G inside.

As shown in FIG. 1, the fitting portion 21 particularly has a substantially cylindrical or tubular shape and/or at least one seal ring 23 is to be mounted on the outer peripheral surface of the fitting portion 21. When the fitting portion 21 at least partly is fitted into the mounting hole, this at least one seal ring 23 is held in close contact with the outer peripheral surface of the fitting portion 21 and the inner peripheral surface of the mounting hole to seal between the outer peripheral surface of the fitting portion 21 and the inner peripheral surface of the mounting hole.

As shown in FIG. 7, one or more, particularly a pair of wire insertion holes 24, through which the one or more respective wires W are to be inserted or passed in forward and backward directions FBD, are formed (particularly substantially side by side in a width direction in one or more stages) in the fitting portion 21, and an inner diameter thereof particularly is slightly larger than an outer diameter of the wires W.

Since only the wire(s) W is/are accommodated in the fitting portion 21, an outer dimension of the fitting portion 21 can be made smaller in the width direction of the fitting portion 21 as compared with a fitting portion for accommodating one or more terminal fittings having a larger dimension in the width direction than the wire(s) W.

The resilient plug(s) G (particularly the substantially ring-shaped rubber plugs G) externally mounted on the wires W can be at least partly accommodated in the resilient plug accommodating portion 22 (particularly the rubber plug accommodating portion 22). When being at least partly accommodated into the resilient plug accommodating portion 22, the resilient plug G (particularly the rubber plug G) comes into close contact with the outer peripheral surface of the wire W and the inner peripheral surface of the resilient plug accommodating portion 22, thereby sealing between the wire W and the resilient plug accommodating portion 22.

As shown in FIG. 6, a resilient plug presser 25 (particularly a rubber plug presser 25) to be engaged with the rear end surfaces of the resilient plugs G from behind for a locking purpose is assembled to the housing 20, particularly at least partly into a rear end part of the resilient plug accommodating portion 22. A front end part of the resilient plug presser 25 is formed to be fittable into the resilient plug accommodating portion 22, and the resilient plug presser 25 is assembled into the resilient plug accommodating portion 22 by engaging at least one locking projection 26 formed on (particularly the front end part of) the resilient plug presser 25 with the inner wall of the resilient plug accommodating portion 22. In this way, the one or more resilient plugs G are held not to come out of the resilient plug accommodating portion 22.

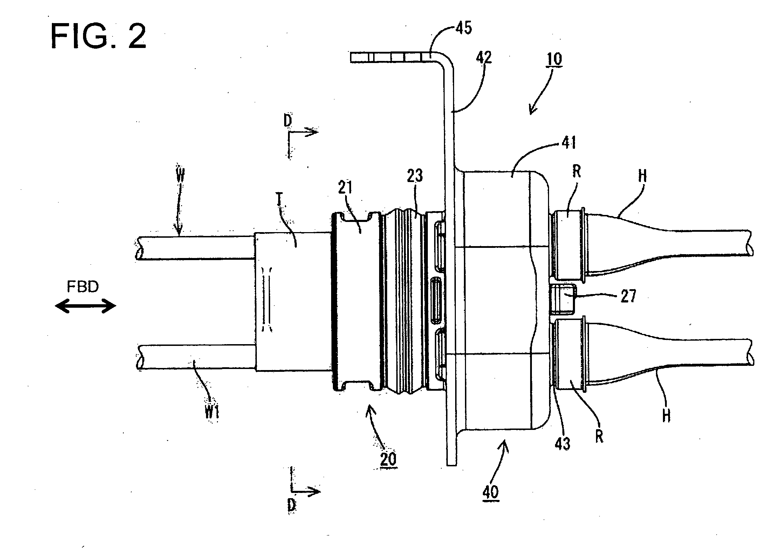

The shield shell 40 particularly is formed such as by press-working and drawing an electrically conductive (particularly metal) plate material. Further, as shown in FIGS. 1 and 2, the shield shell 40 includes a shell main portion 41 for at least partly accommodating the resilient plug accommodating portion 22 inside and a bulging portion 42 bulging outward from the shell main portion 41.

As shown in FIGS. 1 and 7, the shell main portion 41 particularly substantially is in the form of a receptacle which is open forward and the resilient plug accommodating portion 22 is or can be at least partly accommodated thereinto particularly substantially from front. One or more, particularly a pair of shield-connecting portions 43 are formed (particularly substantially side by side) in or on (particularly a back wall 41A of) the shell main portion 41. The shield-connecting portion 43 particularly substantially is in the form of a cylindrical hole penetrating in forward and backward directions FBD and so formed that the wire W pulled out backward from the resilient plug accommodating portion 22 of the housing 20 can be passed therethrough. A shield conductor (particularly a braided wire) H is mounted on the outer peripheral surface of the shield-connecting portion 43 and a connection member is connected (particularly a crimp ring R is crimped or bent or folded), whereby the shield conductor (particularly the braided wire) H is shield-connected and the wire W pulled out backward from the shield-connecting portion 43 is shielded by the shield conductor (braided wire) H. It should be understood that a shield conductor H different from a braided wire may be used according to a particular embodiment such as a conductive sheet or layer, a conductive film or the like.

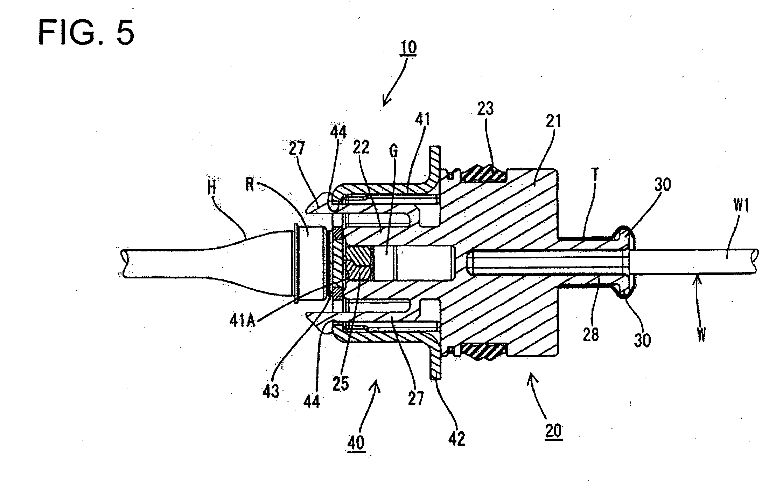

As shown in FIG. 5, a pair of upper and lower locking holes 44 are formed in the back wall 41A of the shell main portion 41. On the other hand, one or more resilient locking pieces 27 insertable into the one or more respective locking holes 44 are provided on the resilient plug accommodating portion 22, particularly respectively provided on both upper and lower surfaces of the resilient plug accommodating portion 22. These resilient locking pieces 27 particularly substantially extend backward in a cantilever manner and are formed to be resiliently deformable in a vertical direction or a direction intersecting the forward and backward directions FBD. When the resilient plug accommodating portion 22 at least partly is accommodated into the shell main portion 41, leading end part(s) of the resilient locking piece(s) 27 is/are respectively engaged with peripheral edge part(s) of the locking hole(s) 44 particularly substantially from behind. In this way, the housing 20 is held and fixed to the shield shell 40.

As shown in FIGS. 1 and 2, the bulging portion 42 bulges out to extend along the outer surface of the case (in a direction at an angle different from 0° or 180°, preferably substantially perpendicular to an axial direction of the shell main portion 41 and/or the forward and backward directions FBD) and particularly is circumferentially provided on a front end opening edge of the shell main portion 41. Further, the bulging portion 42 particularly substantially comes into surface contact with the outer surface of the case when the fitting portion 21 of the housing 20 is fitted into the mounting hole.

A mounting piece 45 extending forward (or at an angle different from 0° or 180°, preferably substantially perpendicular to the bulging portion 42) is formed on (particularly one lateral edge of) the bulging portion 42. A bolt insertion hole 45A substantially penetrating in a plate thickness direction particularly is formed in the mounting piece 45, and the shield shell 40 is held and fixed to the case and shield-connected particularly by inserting an unillustrated bolt into the bolt insertion hole 45A and screwing the bolt into the case.

As shown in FIGS. 1 to 4, a housing projecting portion 28 projecting forward (or along the forward and backward directions FBD) is formed on (particularly the front surface of) the fitting portion 21, and this housing projecting portion 28 and the one or more (e.g. two) wires W pulled out forward from the fitting portion 21 are tied together by at least one adhesive tape T, thereby being integrally fixed.

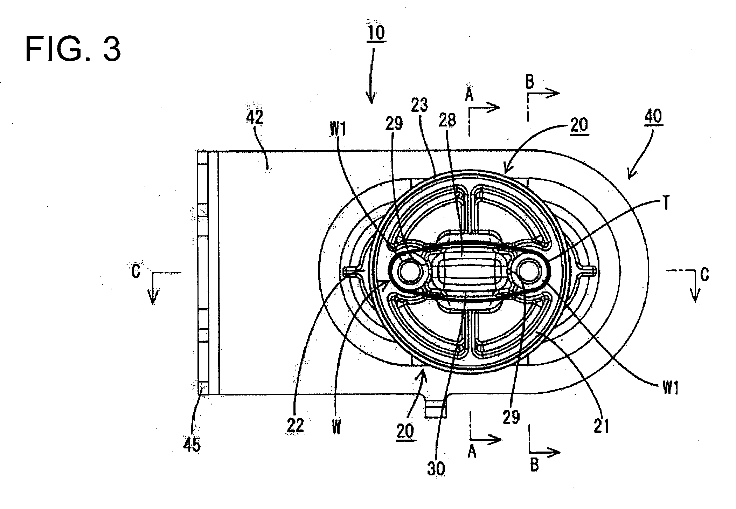

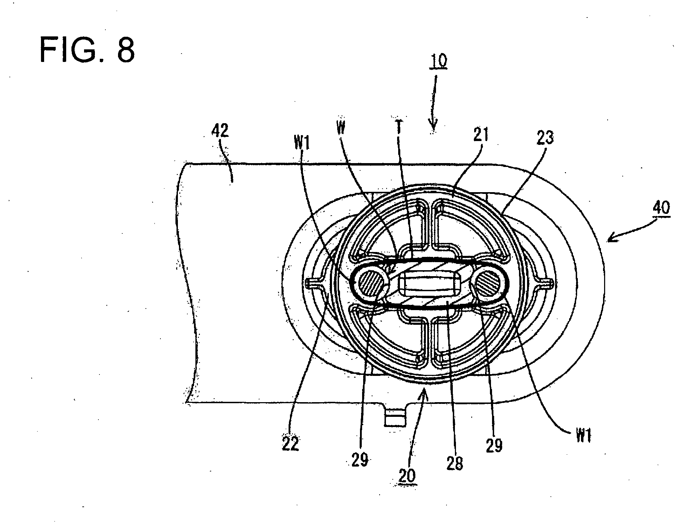

Specifically, as shown in FIG. 7, the housing projecting portion 28 is arranged adjacent to the one or more wires W (particularly at least partly between the two wires W) pulled out forward from the front end surface of the fitting portion 21 and/or substantially extends straight along the one or more (e.g. two) wires W. As shown in FIGS. 3 and 8, one or more, particularly a pair of guide grooves 29 into which the one or more respective wires W arranged adjacent to (particularly at the opposite sides of) the housing projecting portion 28 are to be fitted are formed on (particularly substantially opposite widthwise end parts of) the housing projecting portion 28. These one or more (particularly pair of) guide grooves 29 particularly are formed to substantially have a concave cross-section recessed inwardly in the width direction, and/or particularly extend from the position of the front end surface of the fitting portion 21 to the front end position of the housing projecting portion 28. The wire(s) W is/are respectively fitted into the guide groove(s) 29 in the width direction, whereby the wire(s) W can be arranged along the housing projecting portion 28

A dimension of the housing projecting portion 28 in the vertical direction (projecting direction) is slightly larger than the outer diameter of the wire(s) W. In a state where the wire(s) W is/are fitted in the (particularly both) guide groove(s) 29, an outer peripheral shape formed by the upper and lower surfaces of the housing projecting portion 28 and the outer peripheral surface(s) of the (both) wire(s) W located adjacent to (particularly substantially on the widthwise outer sides) is set to be a substantially elliptical shape long in a lateral direction (or a direction at an angle different from 0° or 180°, preferably substantially perpendicular to the forward and backward directions FBD).

Further, as shown in FIG. 5, one or more, particularly a pair of vertically bulging flanges 30 are formed on or near a leading end part (front end part) of the housing projecting portion 28.

The adhesive tape T particularly is made of resin and/or the width thereof is slightly larger than a projecting distance of the housing projecting portion 28 as shown in FIG. 7. Further, as shown in FIGS. 2, 4 and 5, the adhesive tape T is to be wound around the housing projecting portion 28 and the wire(s) W in the width direction intersecting with an extending direction of the wire(s) W with the wire(s) W respectively at least partly fitted in the guide groove(s) 29 of the housing projecting portion 28, and/or particularly substantially covers from the base end of the housing projecting portion 28 to a position somewhat before the leading end of the housing projecting portion 28. Specifically, as shown in FIGS. 3 and 8, the wound adhesive tape T particularly has a substantially elliptical cross-sectional shape and reliably and closely sticks to the upper and lower surfaces of the housing projecting portion 28 and the outer peripheral surfaces of the widthwise outer sides of the both wires W. In this way, the one or more (e.g. two) wires W and the housing projecting portion 28 are integrally fixed.

Further, if the wire W is pulled forward or backward or swung in the width direction in a state where the one or more (e.g. two) wires W and the housing projecting portion 28 are fixed, the adhesive tape T follows the wire W while integrally fixing the (both) wire(s) W and the housing projecting portion 28, whereby the state where the (both) wire(s) W is/are fixed to the housing projecting portion 28 can be maintained. In this way, a state where the wire(s) W is/are fixed to the housing 20 can be maintained while avoiding the breakage of the insulation coating(s) W1 of the wire(s) W.

Further, since the adhesive tape T particularly sticks to the wire(s) W and the housing projecting portion 28, the wire(s) W and the housing projecting portion 28 can be more reliably integrally fixed. This can further suppress displacements of the wire(s) W from the housing projecting portion 28 in forward and backward directions FBD as compared with the case where the wire W and the housing projecting portion are fixed by a heat shrinking tube or the like.

Further, when the housing projecting portion 28 and the one or more (particularly both) wires W particularly are tied together by the adhesive tape T, the one or more (particularly pair of) flanges 30 of the housing projecting portion 28 laterally or vertically bite into the adhesive tape T, whereby a front end part of the adhesive tape T laterally or vertically bulges. Specifically, a fixing force of the adhesive tape T to the housing projecting portion 28 can be enhanced. This can suppress a forward or backward displacement of the adhesive tape T from the housing projecting portion 28 even if the wire W is strongly pulled forward or backward. Consequently, forward and backward displacements of the wire(s) W from the housing 20 can be suppressed.

This embodiment is configured as described above. Next, an example of a method for fixing the wires W to the wire fixing member 10 is briefly described and functions and effects thereof are described.

First, the one or more (e.g. two) wires W each having the resilient plug G (particularly the rubber plug G) externally mounted and the housing 20 are prepared, and the wire(s) W is/are inserted into the resilient plug accommodation portion 22 (particularly the rubber plug accommodating portion 22) and pulled out forward from the wire insertion hole(s) 24 of the fitting portion 21.

Then, the resilient plug(s) G is/are at least partly inserted into the resilient plug accommodating portion 22 and the resilient plug presser 25 (particularly the rubber plug presser 25) particularly is further assembled into the resilient plug accommodating portion 22 behind or adjacent to the resilient plugs G. In this way, sealing is provided between the outer peripheral surface(s) of the wire(s) W and the inner peripheral surface of the resilient plug accommodating portion 22 by the resilient plugs G and the resilient plugs G particularly are retained by the resilient plug presser 25. Further, the one or more terminal fittings are connected (particularly crimped and connected) to one or more ends of the wire(s) W pulled out forward a specified (predetermined or predeterminable) distance from the fitting portion 21.

Subsequently, the one or more (e.g. two) wires W pulled out from the front surface of the fitting portion 21 at least partly are fitted into the one or more respective guide grooves 29 and/or substantially arranged along the (particularly substantially opposite end parts of) the housing projecting portion 28. Then, the adhesive tape T is wound around the housing projecting portion 28 and the one or more (e.g. two) wires W at least partly several times. At this time, since the one or more (both) wires W are guided by the respective guide groove(s) 29, the wire(s) W can easily substantially extend along (particularly the opposite end parts of) the housing projecting portion 28 as compared with the case where they are not guided. In this way, operability in integrally fixing the housing projecting portion 28 and the wires W by the adhesive tape T can be improved.

The adhesive tape T adheres to the lateral (upper and lower) surfaces of the housing projecting portion 28 and the outer peripheral surface(s) of the widthwise outer side(s) of the one or more (e.g. two) wires W and at least partly covers the housing projecting portion 28 and the (two) wire(s) W, whereby the housing projecting portion 28 and the (two) wire(s) W are integrally fixed. Further, at or near the front end part of the adhesive tape T, the flange(s) 30 of the housing projecting portion 28 particularly bite(s) and/or engage(s) into the adhesive tape T and a fixing force of the adhesive tape T to the housing projecting portion 28 can be further enhanced. In this way, the one or more (e.g. two) wires W can be reliably fixed to the housing 20.

Since the wire(s) W particularly is/are pulled out from both front and rear sides in the wire fixing member 10 through which the wire(s) W particularly substantially is/are passed in forward and backward directions FBD as in this embodiment, the wire(s) W may be strongly pulled in forward and backward directions FBD and/or largely swung in the width direction in fixing the wire fixing member 10 to the case or fixing the terminal fitting(s) to the terminal block. In such a case, a stress particularly concentrates on a part where the wire(s) W is/are fixed. However, since the wire(s) W particularly is/are fixed to the housing projecting portion 28 by the adhesive tape T made of resin according to this embodiment, the adhesive tape T follows the wire(s) W and the wire(s) W and the housing projecting portion 28 are maintained in an integrally fixed state. Thus, the state where the wire(s) W is/are fixed to the housing 20 can be maintained while avoiding a situation where the insulation coating(s) is/are damaged e.g. by a metal crimp member as with the conventional technology.

Further, since the one or more flanges 30 particularly bite into the adhesive tape T wound around the housing projecting portion 28 according to this embodiment, the fixing force of the adhesive tape T to the housing projecting portion 28 can be enhanced and/or displacements of the adhesive tape T from the housing projecting portion 28 in forward and backward directions FBD can be suppressed or significantly reduced. Thus, the state where the wires W are fixed to the housing 20 can be more reliably maintained.

Accordingly, to fix a wire without damaging an insulation coating thereof., a wire fixing member 10 to be fixed to an unillustrated case housing of a device by fixing a shield shell 40 to the case includes a housing 20 to be held in the shield shell 40, one or more wires W pulled out through the housing 20, a housing projecting portion 28 located at a part of the housing 20 where the one or more wires W are pulled out and formed to substantially project along the wires W, and an adhesive tape T for integrally fixing the wire(s) W and the housing projecting portion 28 by covering both the wire(s) W and the housing projecting portion 28 and adhering to the wire(s) W and the housing projecting portion 28.

### <Other Embodiments>

The present invention is not limited to the above described and illustrated embodiment. For example, the following embodiments are also included in the technical scope of the present invention.
(1) Although the two wires W are passed through the housing 20 in the above embodiment, the present invention is not limited to such a mode and, for example, a housing may be so configured that one, three or four or more wires are passed therethrough.
(2) Although the wire fixing member 10 is of a fluidproof waterproof type including the resilient plugs G (particularly the rubber plugs G) and/or the seal ring 23 in the above embodiment, the present invention is not limited to such a mode and, for example, may be applied to a non-fluidproof or non-waterproof wire fixing member.
(3) Although a covering member is the adhesive tape T in the above embodiment, the present invention is not limited to such a mode and, for example, the covering member may be a heat shrinking tube.

### Reference Numerals

- 10:: wire fixing member
- 20:: housing
- 28:: housing projecting portion
- 29:: guide groove
- 30:: flange
- 40:: shield shell
- T:: adhesive tape (covering member)
- W:: wire

## Claims

1. A wire fixing member (10) to be fixed to a case housing of a device, comprising:
a shield shell (40) to be fixed to the case housing;
a housing (20) to be at least partly held in the shield shell (40);
at least one wire (W) pulled out through the housing (20);
at least one housing projecting portion (28) located at a part of the housing (20) where the wire (W) is pulled out and formed to project substantially along the wire (W); and
a covering member (T) for integrally fixing the wire (W) and the housing projecting portion (28) by covering both the wire (W) and the housing projecting portion (28) and adhering to the wire (W) and the housing projecting portion (28)
**characterized in that** the shield shell (40) comprises at least one shield-connecting portion (43) through which the wire (W) can be passed, and wherein the shield-connecting portion (43) is to be connected to the wire (W) by means of a shield conductor (H) and a connection member (R).

2. A wire fixing member according to claim 1, wherein the housing projecting portion (28) is formed with at least one guide groove (29) into which the wire (W) at least partly is to be fitted.

3. A wire fixing member according to any one of the preceding claims, wherein at least one flange (30) which bites or engages into the covering member (T) is formed at or near a leading end part of the housing projecting portion (28) in a projecting direction.

4. A wire fixing member according to any one of the preceding claims, wherein the covering member (T) comprises an adhesive tape (T) which sticks to the wire (W) and the housing projecting portion (28).

5. A wire fixing member according to any one of the preceding claims, wherein a dimension of the housing projecting portion (28) in a projecting direction is slightly larger than the outer diameter of the wire (W).

6. A wire fixing member according to any one of the preceding claims, wherein a width of the covering member (T) is slightly larger than a projecting distance of the housing projecting portion (28).

7. A wire fixing member according to any one of the preceding claims, wherein the covering member (T) is to be wound around the housing projecting portion (28) and the wire (W) in the width direction intersecting with an extending direction of the wire (W) and/or substantially covers from a base end of the housing projecting portion (28) to a position somewhat before the leading end of the housing projecting portion (28).

8. A wire fixing member according to any one of the preceding claims, wherein the housing (20) comprises a resilient plug accommodating portion (22) for at least partly accommodating a respective resilient plug (G) fitted to the wire (W) inside to provide fluidproofness.

9. A method for fixing at least one wire (W) to a wire fixing member (10) to be fixed to a case housing of a device by fixing a shield shell (40) to the case, comprising:
providing a housing (20) to be at least partly held in the shield shell (40);
pulling out at least one wire (W) through the housing (20) such as to be located near and project substantially along at least one housing projecting portion (28) of the housing (20); and
integrally fixing the wire (W) and the housing projecting portion (28) by covering both the wire (W) and the housing projecting portion (28) with a covering member (T) and adhering the covering member (T) to the wire (W) and the housing projecting portion (28),
**characterized by** passing the wire (W) through at least one shield-connecting portion (43) of the shield shell (40), and connecting the shield-connecting portion (43) to the wire (W) by means of a shield conductor (H) and a connection member (R).

10. A wire fixing method according to claim 9, further comprising at least partly fitting the wire (W) into at least one guide groove (29) of the housing projecting portion (28).

11. A wire fixing method according to claim 9 or 10, further comprising biting or engaging at least one flange (30) formed at or near a leading end part of the housing projecting portion (28) in a projecting direction into the covering member (T).

12. A wire fixing method according to any one of the preceding claims 9 to 11, wherein the covering member (T) comprises an adhesive tape (T) which sticks to the wire (W) and the housing projecting portion (28).

13. A wire fixing method according to any one of the preceding claims 9 to 12, wherein the covering member (T) is wound around the housing projecting portion (28) and the wire (W) in the width direction intersecting with an extending direction of the wire (W) and/or substantially covers from a base end of the housing projecting portion (28) to a position somewhat before the leading end of the housing projecting portion (28).

## Patentansprüche

1. Drahtfixier- bzw. -befestigungsglied (10), das an einem Ummantelungsgehäuse einer Vorrichtung zu fixieren bzw. zu befestigen ist, umfassend:
eine Abschirmhülle (40), die an dem Ummantelungsgehäuse zu fixieren bzw. zu befestigen ist;
ein Gehäuse (20), das zumindest teilweise in der Abschirmhülle (40) zu halten ist;
zumindest einen Draht (W), der durch das Gehäuse (20) herausgezogen ist;
zumindest einen Gehäusevorsprungsabschnitt (28), der sich an einem Teil des Gehäuses (20) befindet, wo der Draht (W) herausgezogen ist, und so gebildet ist, dass er im Wesentlichen entlang des Drahts (W) vorspringt; und
ein Abdeckungsglied (T) zum integralen bzw. einstückigen Fixieren bzw. Befestigen des Drahts (W) und des Gehäusevorsprungsabschnitts (28) durch Abdecken des Drahts (W) und des Gehäusevorsprungsabschnitts (28) und Anhaften an dem Draht (W) und dem Gehäusevorsprungsabschnitt (28),
**dadurch gekennzeichnet, dass** die Abschirmhülle (40) zumindest einen Abschirmverbindungsabschnitt (43) umfasst, durch den der Draht (W) geführt werden kann, und wobei der Abschirmverbindungsabschnitt (43) mit dem Draht (W) mittels eines Abschirmverbinders (H) und eines Verbindungsglieds (R) zu verbinden ist.

2. Drahtfixierglied nach Anspruch 1, wobei der Gehäusevorsprungsabschnitt (28) mit zumindest einer Führungsnut bzw. -rille (29) gebildet ist, in die der Draht (W) zumindest teilweise einzupassen ist.

3. Drahtfixierglied nach einem der vorhergehenden Ansprüche, wobei zumindest ein Flansch (30), der in das Abdeckungsglied (T) beißt oder eingreift, an oder nahe einem Führungsendteil des Gehäusevorsprungsabschnitts (28) in einer Vorsprungsrichtung gebildet ist.

4. Drahtfixierglied nach einem der vorhergehenden Ansprüche, wobei das Abdeckungsglied (T) ein Klebeband (T) umfasst, das an dem Draht (W) und dem Gehäusevorsprungsabschnitt (28) anhaftet.

5. Drahtfixierglied nach einem der vorhergehenden Ansprüche, wobei eine Abmessung des Gehäusevorsprungsabschnitts (28) in einer Vorsprungsrichtung etwas größer ist als der Außendurchmesser des Drahts (W).

6. Drahtfixierglied nach einem der vorhergehenden Ansprüche, wobei eine Breite des Abdeckungsglieds (T) etwas größer ist als ein Vorsprungsabstand des Gehäusevorsprungsabschnitts (28).

7. Drahtfixierglied nach einem der vorhergehenden Ansprüche, wobei das Abdeckungsglied (T) um den Gehäusevorsprungsabschnitt (28) und den Draht (W) herum in der Breitenrichtung zu wickeln ist, die sich mit einer Erstrekkungsrichtung des Drahts (W) schneidet, und/oder im Wesentlichen von einem Basisende des Gehäusevorsprungsabschnitts (28) zu einer Position etwas vor dem Führungsende des Gehäusevorsprungsabschnitts (28) abdeckt.

8. Drahtfixierglied nach einem der vorhergehenden Ansprüche, wobei das Gehäuse (20) einen Rückstellfähiger-Stecker-Aufnahmeabschnitt (22) zum zumindest teilweisen Aufnehmen eines jeweiligen rückstellfähigen Steckers (G), der an den Draht (W) gepasst ist, im Inneren umfasst, um Fluid- bzw. Flüssigkeitsdichtheit bereitzustellen.

9. Verfahren zum Fixieren bzw. Befestigen zumindest eines Drahts (W) an einem Drahtfixier- bzw. -befestigungsglied (10), das an einem Ummantelungsgehäuse einer Vorrichtung zu fixieren bzw. zu befestigen ist, und zwar durch Fixieren bzw. Befestigen einer Abschirmhülle (40) an der Ummantelung, umfassend:
Bereitstellen eines Gehäuses (20), das zumindest teilweise in der Abschirmhülle (40) zu halten ist;
Herausziehen zumindest eines Drahts (W) durch das Gehäuse (20), so dass er sich nahe zumindest eines Gehäusevorsprungsabschnitts (28) des Gehäuses (20) befindet und im Wesentlichen entlang diesem vorspringt;
integrales bzw. einstückiges Fixieren bzw. Befestigen des Drahts (W) und des Gehäusevorsprungsabschnitts (28) durch Abdecken sowohl des Drahts (W) als auch des Gehäusevorsprungsabschnitts (28) mit einem Abdeckungsglied (T) und Anhaften des Abdeckungsglieds (T) an den Draht (W) und den Gehäusevorsprungsabschnitt (28),
gekennzeichnet durch Führen des Drahts (W) durch zumindest einen Abschirmverbindungsabschnitt (43) der Abschirmhülle (40) und Verbinden des Abschirmverbindungsabschnitts (43) mit dem Draht (W) mittels eines Abschirmverbinders (H) und eines Verbindungsglieds (R).

10. Drahtfixierverfahren nach Anspruch 9, ferner umfassend zumindest teilweises Einpassen des Drahts (W) in zumindest eine Führungsnut bzw. -rille (29) des Gehäusevorsprungsabschnitts (28).

11. Drahtfixierverfahren nach Anspruch 9 oder 10, ferner umfassend Beißen oder Eingreifen zumindest eines Flansches (30), der an oder nahe einem Führungsendteil des Gehäusevorsprungsabschnitts (28) in einer Vorsprungsrichtung gebildet ist, in das Abdeckungsglied (T).

12. Drahtfixierverfahren nach einem der vorhergehenden Ansprüche 9 bis 11, wobei das Abdeckungsglied (T) ein Klebeband (T) umfasst, das an dem Draht (W) und dem Gehäusevorsprungsabschnitt (28) anhaftet.

13. Drahtfixierverfahren nach einem der vorhergehenden Ansprüche 9 bis 12, wobei das Abdeckungsglied (T) um den Gehäusevorsprungsabschnitt (28) und den Draht (W) herum in der Breitenrichtung gewickelt wird, die sich mit einer Erstreckungsrichtung des Drahts (W) schneidet, und/oder im Wesentlichen von einem Basisende des Gehäusevorsprungsabschnitts (28) zu einer Position etwas vor dem Führungsende des Gehäusevorsprungsabschnitts (28) abdeckt.

## Revendications

1. Elément de fixation de fil (10) devant être fixé à un logement de boîtier d'un dispositif, comprenant :
une coque de blindage (40) devant être fixée au logement de boîtier ;
un logement (20) devant être au moins partiellement maintenu dans la coque de blindage (40) ;
au moins un fil (W) extrait à travers le logement (20) ;
au moins une portion saillante de logement (28) située au niveau d'une partie du logement (20) où le fil (W) est extrait et formée pour faire saillie essentiellement le long du fil (W) ; et
un élément de recouvrement (T) pour fixer intégralement le fil (W) et la portion saillante de logement (28) en recouvrant à la fois le fil (W) et la portion saillante de logement (28) et adhérant au fil (W) et à la portion saillante de logement (28),
**caractérisé en ce que** la coque de blindage (40) comprend au moins une portion de connexion de blindage (43) à travers laquelle le fil (W) peut être passé, et dans lequel la portion de connexion de blindage (43) doit être connectée au fil (W) au moyen d'un conducteur de blindage (H) et d'un élément de connexion (R).

2. Elément de fixation de fil selon la revendication 1, dans lequel la portion saillante de logement (28) est formée d'au moins une rainure de guidage (29) dans laquelle le fil (W) doit au moins partiellement être ajusté.

3. Elément de fixation de fil selon l'une quelconque des revendications précédentes, dans lequel au moins une bride (30) qui mord ou s'engage dans l'élément de recouvrement (T) est formée au niveau ou près d'une partie d'extrémité de tête de la portion saillante de logement (28) dans une direction saillante.

4. Elément de fixation de fil selon l'une quelconque des revendications précédentes, dans lequel l'élément de recouvrement (T) comprend un ruban adhésif (T) qui colle au fil (W) et à la portion saillante de logement (28).

5. Elément de fixation de fil selon l'une quelconque des revendications précédentes, dans lequel une dimension de la portion saillante de logement (28) dans une direction saillante est légèrement supérieure au diamètre externe du fil (W).

6. Elément de fixation de fil selon l'une quelconque des revendications précédentes, dans lequel une largeur de l'élément de recouvrement (T) est légèrement supérieure à une distance saillante de la portion saillante de logement (28).

7. Elément de fixation de fil selon l'une quelconque des revendications précédentes, dans lequel l'élément de recouvrement (T) doit être enroulé autour de la portion saillante de logement (28) et du fil (W) dans le sens de la largeur coupant une direction d'extension du fil (W) et/ou couvre essentiellement d'une extrémité de base de la portion saillante de logement (28) à une position quelque peu avant l'extrémité de tête de la portion saillante de logement (28).

8. Elément de fixation de fil selon l'une quelconque des revendications précédentes, dans lequel le logement (20) comprend une portion d'hébergement de bouchon élastique (22) pour héberger au moins partiellement un bouchon élastique respectif (G) ajusté sur le fil (W) à l'intérieur pour fournir une étanchéité au fluide.

9. Procédé de fixation d'au moins un fil (10) à un élément de fixation de fil (10) devant être fixé à un logement de boîtier d'un dispositif en fixant une coque de blindage (40) au boîtier, comprenant :
fournir un logement (20) devant être au moins partiellement maintenu dans la coque de blindage (40) ;
extraire au moins un fil (W) à travers le logement (20) de manière à être situé près de et faire saillie essentiellement le long d'au moins une portion saillante de logement (28) du logement (20) ; et
fixer intégralement le fil (W) et la portion saillante de logement (28) en recouvrant à la fois le fil (W) et la portion saillante de logement (28) avec un élément de recouvrement (T) et faisant adhérer l'élément de recouvrement (T) au fil (W) et à la portion saillante de logement (28),
**caractérisé par** le passage du fil (W) à travers au moins une portion de connexion de blindage (43) de la coque de blindage (40) et la connexion de la portion de connexion de blindage (43) au fil (W) au moyen d'un conducteur de blindage (H) et d'un élément de connexion (R).

10. Procédé de fixation de fil selon la revendication 9, comprenant en outre ajuster au moins partiellement le fil dans au moins une rainure de guidage (29) de la portion saillante de logement (28).

11. Procédé de fixation de fil selon la revendication 9 ou 10, comprenant en outre mordre ou engager au moins une bride (30) formée au niveau ou près d'une partie d'extrémité de tête de la portion saillante de logement (28) dans une direction saillante dans l'élément de recouvrement (T).

12. Procédé de fixation de fil selon l'une quelconque des revendications précédentes 9 à 11, dans lequel l'élément de recouvrement (T) comprend un ruban adhésif (T) qui colle au fil (W) et à la portion saillante de logement (28).

13. Procédé de fixation de fil selon l'une quelconque des revendications précédentes 9 à 12, dans lequel l'élément de recouvrement (T) est enroulé autour de la portion saillante de logement (28) et du fil (W) dans le sens de la largeur coupant une direction d'extension du fil (W) et/ou couvre essentiellement d'une extrémité de base de la portion saillante de logement (28) à une position quelque peu avant l'extrémité de tête de la portion saillante de logement (28).
